# EUROPEAN PATENT SPECIFICATION

(11) **EP 0 485 456 B1**
(45) Date of publication and mention of the grant of the patent: **08.03.1995**
(21) Application number: 90911847.3
(22) Date of filing: 02.08.1990
(51) Int. Cl.: A21C 3/02

(54) **METHOD AND APPARATUS FOR PRODUCING THIN SHEETS OF STARCH CONTAINING FOOD MATERIAL**
VERFAHREN ZUR HERSTELLUNG DÜNNER BLÄTTER AUS STÄRKE, DIE NAHRUNGSMITTEL ENTHALTEN
PROCEDE ET APPAREIL DE PRODUCTION DE FINES FEUILLES D'AMIDON CONTENANT DES MATIERES COMESTIBLES

(30) Priority: 02.08.1989 AU 5570/89; 07.08.1989 AU 5664/89; 13.10.1989 AU 6844/89; 04.01.1990 AU 8080/90
(43) Date of publication of application: 20.05.1992
(73) Proprietor: M.J. QUINLAN & ASSOCIATES PTY. LIMITED, Cronulla, NSW 2230 (AU)
(72) Inventor: QUINLAN, Michael, John, Cronulla, NSW 2230 (AU)
(74) Representative: Jenkins, Peter David
(86) International application number: AU9000328
(87) International publication number: WO9101643

(56) References cited:
- WO-A-88/06849
- DE-C- 964 132
- FR-A- 2 352 495
- GB-A- 254 172
- GB-A- 560 685
- GB-A- 635 015
- GB-A- 2 013 328
- NL-A- 14 760
- US-A- 1 830 426
- US-A- 2 608 939
- US-A- 2 642 014

## Description

This invention concerns apparatus and a method for producing thin sheets of farinaceous material and food products produced from these sheets, such as snack foods, biscuits, crackers, breakfast foods, pastries, pasta, pita breads, and pet foods. The apparatus is a new type of continuous sheet extruder, or cooker-extruder for making these sheets. A hollow food product which may be produced using the apparatus, and which may totally encapsulate another food article such as a nut, also forms part of the invention.

International PCT Patent Application No. PCT/AU88/0064 (published as WO 88/06849) describes a method of producing a hollow, totally enclosed, and self supporting food article by the steps of forming a layered material by contiguously positioning two layers of starch and water containing sheets of food material, such that adjacent sheets do not stick together, then cutting the sheets and hereby causing sealing of the interface between adjacent layers continously around their extremity, and then cooking the shaped food articles in a manner such that steam generated between the layers is of sufficient pressure to force the layers apart in the centre of the article, to create a void in the central area, while retaining contact between the food material sheets of the seal extremities. It would be useful to have a better way of producing the thin sheets required to make these novel food articles.

DE-C-964,132 also discloses an apparatus for rolling a farinaceous material into a thin sheet, as set forth in the preamble portion of claim 1.

It has also been found that prior known methods conventionally used in the food industry for rolling a farinaceous dough into a thin sheet are not ideal. These previously known methods when used to produce thin sheets give low manufacturing productivity and product quality, as a result of difficulties that arise in forming a dough using a mixture containing little of no gluten, or if the farinaceous material does contain gluten then problems occur in rolling the sheet to a thickness of less than 1.5mm because of the stretching and spring back characteristics of the gluten.

In prior art three roll sheeting machines commonly used in the food industry the back pressure in the central region between the rollers is maintained at a relatively low level, and overfeeding of material from the primary roller(s) is compensated for by the excess material being able to flow counter current through the primary roller gap which therefore must be set wide enough for this purpose. In another example of such prior art machines, at least one of the primary rollers is fluted so that excess material is returned back to the feed hopper in the recess of these flutes and by the rotation of the rollers. In some cases the material simply slips on the surface of the primary rollers.

Because only relatively low back pressure is generated in the central region by prior art three roller sheeters the diameters of the secondary rollers have to be such that the nip angle is sufficiently large to create enough drag forces on the material being processed to force it through the final gap between the rollers at the exit.

If rollers of such relatively large diameters are set close enough together to give a thin sheet of farinaceous material in a single pass it has been found that the torque required to drive the rollers become very high and for sheet thickness of less than 1.5 mm the motor power and the mechanical stresses set up are generally in excess of the normal design loads of commonly used sheeters.

For example, U.S. Patent 4752493 describes the difficulties that are experienced in attempts to obtain a smooth thin sheet of uniform thickness by rolling a dough prepared from farinaceous materials. In addition, U.S. Patents Nos 4873093 and 4834996 state that starchy materials such as corn flour and potato flour when mixed with water do not from a workable dough that can be used to form sheets of material typically used in the bakery industry.

Other prior art, for example, the preparation of Pita bread and that described in U.S. Patents Nos. 4455321, 4752493 and 4873093 describe processes for the production of hollow food articles but all of these proceed from a single layer instead on two layers, and/or use chemicals or yeast for leavening gases.

The present invention provides an apparatus for producing a continuous thin sheet of farinaceous material of a thickness of between 0.1 and 3mm from a farinaceous dough, which comprises, closely juxtaposed, a top substantially horizontal pair of rollers which together form an inlet opening and a bottom roller centrally located beneath said top pair of rollers, the said rollers providing a central region for receiving the dough, said rollers, in use, rotating such that dough enters through an inlet opening between the top pair of rollers and exits through an exit opening between a roller of the said top pair and the bottom roller, and in that gaps between adjacent rollers are selected to maintain a positive hydrostatic pressure in the central region between the rollers
characterised in that any openings to the central region formed by the arrangement of said rollers, other than the inlet and exit openings are sealed such that all of the dough is caused to pass directly through the central region and exit through the exit opening thereby to avoid recycling of any of the dough between the top pair of rollers, and in that a spring, hydraulic or pneumatic means which can move said rollers directly in response to preset central region pressure values is provided so as automatically to alter said gaps between said rollers through which the sheet exits whereby said pressure in the central region is maintained and regulated.

The present inventional also provides a method of producing a continuous thin sheet of farinaceous material of a thickness of between 0.1 and 3mm from a farinaceous dough, using an apparatus comprising, closely juxtaposed, a top substantially horizontal pair of rollers and centrally located beneath said top rollers either an additional roller, or an additional pair of rollers, the three or four rollers providing a central region for receiving the dough, said rollers rotating such that dough enters between the two top rollers and exits between a top roller and the bottom roller in the case of one bottom roller, or between both adjacent top and bottom rollers in the case of two bottom rollers, the other openings to the central region being sealed, wherein gaps between adjacent rollers are selected to maintain a positive hydrostatic pressure in the central region between the rollers, and wherein said pressure is maintained and regulated by altering said gap between two rollers through which a sheet exits, by means of a spring, or hydraulic or pneumatic device, such that if said pressure increases above a preset value the rollers move apart, or if said pressure falls below another preset value the rollers move closer together; the method comprising the steps of feeding the dough into the central region via the gap between the top rotating rollers, and producing a thin sheet of farinaceous material through the gap between the one or two bottom rollers and the adjacent top rollers, while maintaining the positive hydrostatic pressure within said central region.

According to the present invention the problems inherent in the prior art are solved and a continuous thin sheet of starch containing food material can be produced by means of a new roller sheet extruding system whereby the moist starch containing material is introduced between the rollers and exits as a thin rolled sheet. Preferably, the moist material introduced into the rollers has been pre-prepared by means of high speed chopping and mixing blades, to forum the material into small moist agglomerates which aid the sheeting process. A back-pressure exerted by the roller arrangement also assists in producing a sheet of material with an improved physical structure. By this means, the complicated steaming and pre-sheeting steps required in the prior art are thus avoided.

Embodiments of the present invention will now be described hereinbelow by way of example only with reference to the accompanying drawings, in which:
Figure 1 shows a cross-sectional view of a three roller sheet extruder.
Figure 2A shows a side view, Figure 2B shows a front view, and Figure 2C shows a back view of the three roller sheet extruder cooker.
Figure 3 shows a four roller sheet extruder.

In the present invention it is preferred that the raw material prior to sheeting is hydrated and agglomerated in a controlled way. When wetted the starch cells will absorb water and begin to swell. Depending on the degree of cell damage and free starch or amylose present a certain amount of agglomeration or clustering of starch cells will occur. By using high speed chopping and mixing blades, and controlling the total moisture added together with the hydration time, a particulate material consisting of moist agglomerates can be produced. With products containing gluten the dough mostly remains undeveloped and its tendency to spring back is reduced. However, for a large commercial scale plant, a continuous process is best, as this not only reduces the amount of handling but also provides a feed mixture to the sheeter of consistent age, degree of hydration, starch retrogration and sheet forming properties.

While the material in some cases can be developed into a soft pliable and plastic dough in the classical way prior to feeding to the sheeter extruder described in the present invention, it has been found that if the mixing and agglomeration process described above is used to prepare the mix the total moisture content can be kept below the point where the mixture and resulting dough sheet are sticky. In this way the dough does not adhere to the rollers and therefore the need for dusting materials necessarily used in the food industry to prevent dough sticking to rollers, conveyors and other processing equipment is eliminated. The lower moisture content at which a sheet can be formed using the present invention also reduces the subsequent drying or cooking times with savings in energy and equipment costs.

Another advantage of preparing a moist particulate material as described, is that because it is free flowing it will feed more uniformly to the first roller set aiding in the production of a more uniform sheet. As a consequence the diameters of the rollers of the sheeter extruder can be made significantly less than would otherwise be the case as the nip angle between the rollers necessary to ensure constant intake of material is reduced. In this way smaller physical plant sizes are possible for a nominated output capacity resulting in cost savings on the processing equipment.

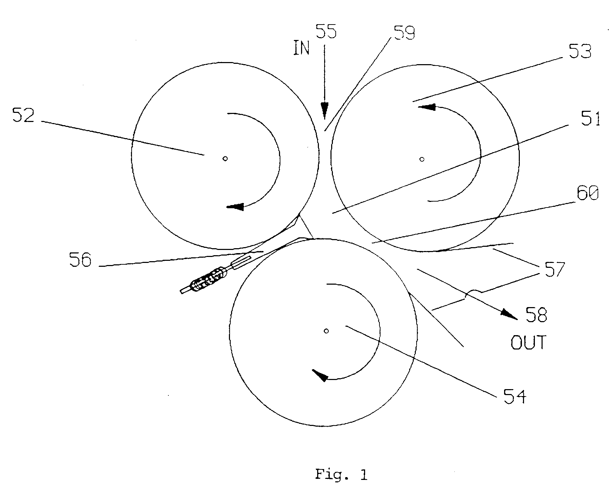

According to the present invention a continuous sheet of farinaceous material may be produced using a three roller system as shown in Fig. 1. In Fig. 1 the rollers are arranged such that there are two rollers 52 and 53 positioned above a roller 54. Raw material is allowed to enter via the top entrance 55. Rollers 52 and 53 and 54 rotate in the direction shown. One of the upper rollers rotates in the opposite direction to the other two rollers. The final sheet product leaves the rollers by exit 58. The rotation of the rollers and the gap setting 60 being less than the gap 59, causes back-pressure to build up within the central area 51. If the gap at 60 is set close to that at 59 low pressure is generated and if gap 60 is increased higher pressure is caused. Raw material is prevented from escaping through passage 56 by a wedge spring loaded back against rollers 52 and 54, and from escaping sideways by either having rotating retaining discs attached to the ends of one roller with a diameter as to cover the central void region or by side plates flush with the ends of the rollers. Scrapers 57 prevent the sheet returning around the rollers.

The gap between rollers 52 and 53 is set so that the pressure required to extrude farinaceous dough back from the central region 51 is greater than the pressure required to extrude the dough through the gap between rollers 53 and 54 which is lower because of the rotational direction of all rollers as shown. There is a positive hydrostatic pressure created in the central region greater than the surrounding external atmosphere and sufficient to cause the farinaceous material to form a cohesive matrix. The material in the central region 51 completely fills this region and behaves as a viscous liquid transmitting pressure equally in all directions.

In the roller design shown in Fig. 1 the roller gap settings and the back-pressure are adjusted to produce a sheet of starch containing food material with minimal starch cell damage and a suitable thickness. The arrangement of the rollers produces a controlled back-pressure which is exerted on the sheet material in the central region 51 between the three rollers as shown in Fig 1. This can occur by spring tension, whereby the gap adjustment mechanism controlling gap 60 is such that if the back pressure in region 51 increases over the set spring tension the roller 53 will move slightly away from roller 54, which increases gap 60 and reduces the back pressure. Further control over the back pressure could be achieved by arranging for a variable and differential speed adjustment to rollers 52, 53 and 54. In this way, if the back pressure in the region 51 increases or decreases from a set value, the speed of one or two rollers is adjusted to reduce the feed of material 55 or increase the exit flow 58, or to do both. In practice spring tension control alone has been found to be effective and least costly.

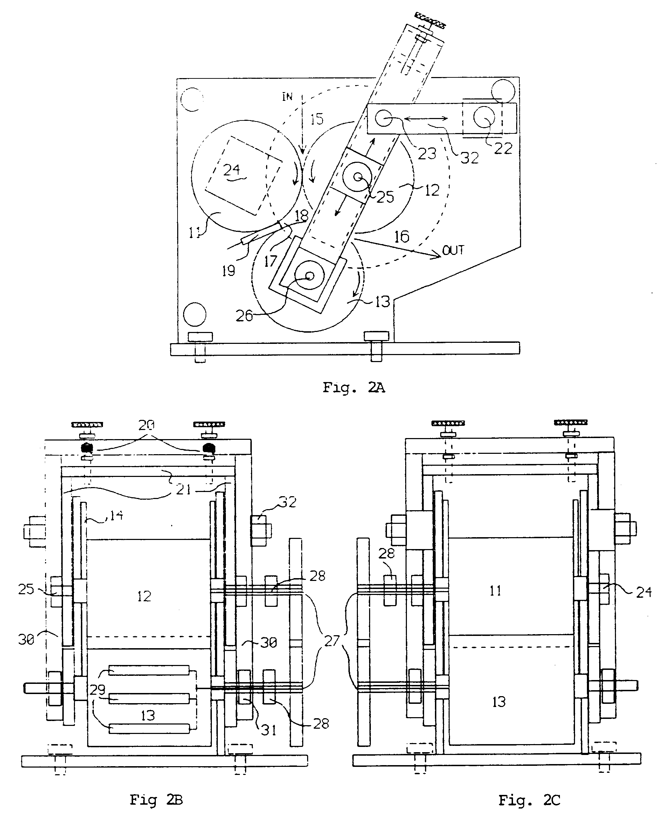

In a further embodiment of the present invention, in Figs 2A, 2B and 2C, the rollers are arranged such that there are two rollers 11 and 12 positioned above roller 13. The rollers 11, 12, and 13 can be heated or cooled and maintained at a controlled temperature by some suitable heat exchange medium. In one example of the present invention Figs 2 show electrical heating elements 29 in appropriately machined recesses within rollers 11, 12, and 13 and connected to an external source of electric current by means of insulated wiring passing through a hollow channel 27 drilled through the roller shafts 24, 25 and 26 and attached to slip ring and brush sets 28 mounted on these shafts. Alternatively the rollers 11, 12 and 13 can be constructed from thick walled steel tubing with end plates fitted, thus forming a hollow region via channel 27 and connected to suitable couplings mounted on the shafts. It is also possible to heat the rollers 11, 12 and 13 directly by external flame or radiated heat. In another application of the present invention the rollers 11, 12 and 13 could be cooled rather than heated.

Further heating or cooling is achievable by utilizing heating or cooling elements positioned within the retaining wedge scraper 19 or by direct steam injection into the central region 18 via ports and channels machined into the wedge 19.

Another aspect of the present invention as shown in Figs 2A/B/C concerns the gap adjustment mechanisms. The bearing supporting shaft 25 is mounted on arm 21 which in turn can slide up or down in guides on arm 30. In this way gap 16 can be increased or decreased by adjusting an adjustment screw 20, or by other adjustment means. Roller 12 can also be pivoted by support arm 30 about shaft 26 by means of a bearing 31. Arm 30 is connected via pivot 23 to arm 32 which can be adjusted backward or forward by means of adjustment 22. In this way gap 15 may be increased or decreased. Beccause of the radial motion of roller 12 around roller 13 adjustments to gap 15 will not affect gap 16. Adjustment to gap 16 which is tangential to roller 11 will have a consequential effect on gap 15.

The design shown in Fig. 1 facilitates generation of a positive and controllable pressure in the central region 18 between the three rollers. This is achievable by using either a spring, hydraulic or pneumatic device at 20 (or a combination of these) whereby the gap adjustment arm 21 is able to be loaded such that if the back pressure in region 18 increases over the set tension, pressure roller 12 will move slightly away from roller 13, which consequently increases gap 16 and reduces the back pressure. If the pressure drops in region 18, roller 12 moves down to decrease gap 16 and the pressure in region 18 is maintained.

In Figs 2A/B/C further control over the back pressure can be achieved by variable and differential speed adjustment to rollers 11, 12 and 13. In his way, if the back pressure in the region 18 increases or decreases from a set value, the speed of one or two rollers in adjusted to increase or reduce the feed of material at 15 or the exit flow 16, or to do both. By selecting the appropriate gap settings for 15 and 16 together with the temperatures of the rollers 11, 12 and 13, and the speeds of these rollers and by adjusting the back pressure in the central region 18 it is possible to cause heat transfer rates, pressure and frictional heat generation and material flows sufficient to continuously heat and process the material. Also, due to the elevating effect of overpressure on the boiling point and the prevention of evaporative losses as a result of the material being totally constrained in region 18 it is possible to process material in this region at higher temperatures than would be possible at atmospheric pressure.

In the prior art, extruders are commonly used to continuously process materials. There are numerous examples of this to be found in the snack food, pasta, breakfast food, bakery, pet food and other related industries, in the form of short and long barrel extruders, the former in general relying on friction to generate heat and pressure, and the latter using external heating jackets as well. Similar extruder/cookers are also used in the pharmaceutical, confectionary, plastics and chemical process industries.

The apparatus of the present invention can be used as an improved method of manufacture for many kinds of products in these industries. For example, if a starch containing food material is cooked and sheeted according to the present invention the sheeted material can be cut, shaped and then fried or baked to produce a snack food or it could be dried after cutting and shaping to yield a snack food pellet. In another example, the sheeted material can be cut and dried to form a crispbread. Furthermore, the sheeted material could be cut and dried to form a pasta product, eg, pre-cooked lasagne sheets. There are many more similar applications which will be obvious to those skilled in the art.

The advantages of the present invention over the prior art extruders are many and include easier operation due to less complication in design and operating principles - for example, cleaning is simpler as all working parts are easier to get at compared to removing the auger or augers from an extruder.

Because of its simpler design, the sheeter cooker of the invention will generally be cheaper in construction and therefore its capital cost will be less than that of an extruder for the same capacity output.

A sheeter/cooker designed according to the present invention does not require expensive and sophisticated dies and change parts and also blockages and production downtime commonly experienced using static small dimensioned die orifices are eliminated.

Because of the relative simplicity of sheeter/cooker equipment, less skill, training and specialised knowledge are required of the operating personnel, and change over times in a production environment are also less. These factors make increased efficiency possible.

As a consequence of the difference in rheology of material being extruded through a fixed die compared to being sheeted through moving rollers, greater mass outputs are possible from a sheeter as compared to an extruder for a given power input, drive motor and physical mechanical size.

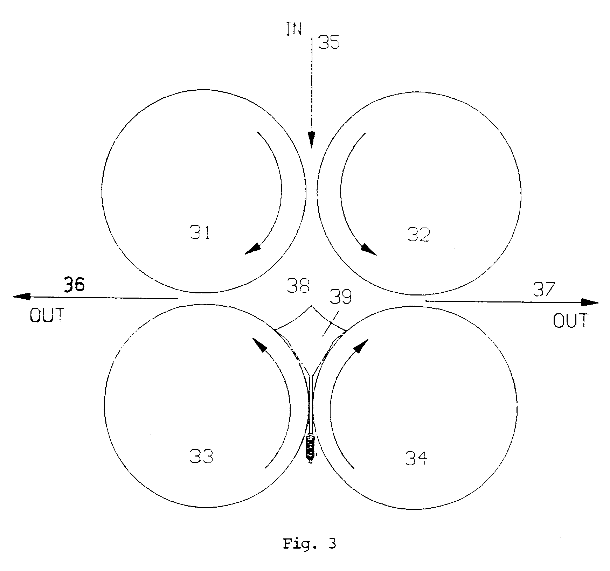

Figures 1 and 2 show a three roller sheeter, but it is also possible to have a system of more then three rollers. For example, a four roller sheeter as shown in Figure 3 will produce two thin sheets of farinaceous material simultaneously. In this configuration the rollers are arranged such that there are two rollers 31 and 32 positioned above two more rollers 33 and 34. All rollers rotate in the direction shown, and rollers directly adjacent each other rotate in opposite directions, while rollers diagonally opposite each other rotate in the same sense. The rotation is such that material will enter via the top gap between rollers, but be prevented from leaving through the bottom gap.

Raw material is allowed to enter via the top gap 35 and exits via gaps 36 and 37. By using this arrangement of rollers and by setting the gaps between the top roller sets 35 and the bottom to top rollers 36 and 37, it is possible to cause a back pressure to build up in the central region 38. To facilitate the setting of each gap the rollers 31 and 32 can be adjusted in or outwards from each other. Similarly, the gaps between rollers 31 and 33 and between 32 and 34 can be adjusted.

The gap between rollers 33 and 34 is fixed and can be set such that these rollers just touch each other, and because of their counter-rotating direction, this prevents any material in the central region 38 from flowing out between these two rollers. Or else, as shown in Fig. 3, a retaining wedge scraper 39 can be used. This wedge can also assist in controlling the material flow, by means of its shape.

The back pressure in the central region is further controlled by the gap adjustment mechanism controlling gaps 36 and 37, which is spring loaded or hydraulically or pneumatically controlled so that if the back pressure in the central region 38 increases above the set point the rollers 31 and 32 will move slightly away from the rollers 33 and 34 thus reducing the back pressure. Conversely, as the back pressure drops, the rollers described above again move closer together and the back pressure again increases. In this way the back pressure in the central region 38 is maintained at a level around a central set point. Heating or cooling of the rollers or the central retaining wedge can also be achieved as previously generally described for the three roll sheet extruder.

A further aspect of the present invention is that by using a three roll sheeter as shown in Fig. 1, together with the pre-sheeting mixing and agglomeration procedure, it is possible to continuously produce a thin sheet of starch containing material without gluten or the need for complicated steaming or heating of the materials or the use of gums or special binders as required in the prior art. By cutting and shaping pieces from sheets produced in this way and baking or frying these single layer pieces, flat snack products like fabricated potato or corn crisps or certain hollow or blistered products similar to those described in U.S. Patents 4873093, 4834996, 4752493, and 3384496 can be produced. This can now be done without the restrictions or special choice of raw materials or the complications of the pre-sheeting processing described in these patents and in other prior art processes, and as a result less expensive equipment and production methods can be used.

PCT Patent Application PCT/AU88/00064 (WO88/06849) describes a method for producing hollow food products from two layers of farinaceous material. The present invention also concerns a method of producing such hollow laminar food products by utilizing the three or four roller sheet extruders described herein to make continuous uniform sheets of starch containing material, which are ideal for producing these hollow products.

The four roll configuration can produce two sheets simultaneously and this has an advantage over prior art production processes in which a single sheet of dough is produced and then must be cut into two sections and laminated one onto the other, or else a wider sheet must be folded partly onto itself to form a laminated sheet. Both these prior art methods are well known in, for example, the bakery industry, to produce pastries or crackers. Because the four roll sheet extruder in the present invention simultaneously produces two sheets of farinaceous material of the same width, it can produce a two layered product using rollers and conveyor systems at half the width of a single sheet extruder of the same output capacity. The present invention thus makes possible significant cost savings on equipment and requires less factory floor space.

Prior to this invention and PCT Application PCT/AU88/00064 the known methods for encapsulating one food inside another were the processes of injection, co-extrusion, encrusting, coating, or by making two sheets and then crimping them together with the encapsulated food positioned in between, as in ravioli production for example. The injection and co-extrusion processes will only work with liquids. Coating and encrusting do not produce laminar hollow foods within the scope of the present invention. The traditional method of making ravioli-type products involves making a sheet of dough which is not suitable for the production of puffed hollow food products; primarily being too thick and high in moisture content, and ravioli does not expand to form a hollow product when cooked by boiling. Ravioli and pasta dough also contain gluten.

The present invention can be utilized for making a puffed hollow food containing a solid, semi-solid or paste encapsulated in the central region. The introduced food, which can be, for example, a chocolate chip, a nut, dried fruit or vegetable, dried fish or meat, or else a paste or a dry flavouring or seasoning mixture or similar filling is positioned so that the two layers, as described in PCT/AU88/00064, are contiguous except where in contact with the introduced food piece, and are completely sealed around the peripheral edge. The introduced food item may be pre-coated or pre-cooked, if desired. The introduced material can also contain a leavening agent such that when heated during the cooking process it produces a gas such as carbon dioxide or ammonia which aids in the puffing process by forcing the layers apart to form the hollow centre. The shaped article is then cooked so as to produce a puffed hollow and shaped food article with the introduced food encapsulated inside. For example, if the introduced food is a nut, the expanded central void after cooking has a greater volume than the encapsulated nut which is then free to rattle within the food article, and this adds to the appeal of the snack, or similar food. A smaller hollow food article may also be positioned within a larger such article by this means.

The invention is now described with reference to certain examples, which are not limiting on the invention:

### EXAMPLE 1

A three roller sheet extruding machine has a general configuration as shown in Figs 1 and 2 with roller diameters of 80 mm and width of 100 mm. It is equipped with a 0.37 kW electric motor and the rotational speed is nominally set at 25 rpm. The back pressure in the central region 18 is controlled by helical springs positioned at 20 and the mechanisms operate as described above.

### EXAMPLE 2

A thin sheet of farinaceous material consisting of potato flakes, granules and starch is manufactured using the apparatus of Example 1.

### INGREDIENTS

| | Grams |
|---|---|
| Potato flakes | 150 |
| Potato granule | 120 |
| Potato starch | 30 |
| Salt | 8 |
| Water | 200 |

### MIXING PROCEDURE

The ingredients are placed in a food processing machine of the type with high speed rotating cutting blades. The dry ingredients are first blended together and then the water is added and then mixed at high speed for 15 seconds. The mix is then allowed to stand for 5 minutes after which it is again mixed at high speed for a further 15 seconds. The resulting mixture is a moist particulate free flowing agglomerated material.

### SHEETING

The roller gap settings are adjusted on the three roller sheeter such that the gap between the primary rollers is 0.4 mm and the gap between the secondary set is 0.2 mm. The spring tension at 20 is set to just counter-balance the upward forces on shaft 25 when operating with the farinaceous material being sheeted.

The moist agglomerated material is placed in the feed hopper mounted above the primary rollers of the prototype three roller sheeter and the material is passed through this machine to produce a continuous uniform sheet of farinaceous material of thickness in the range 0.7 to 1.5 mm depending on the precise adjustment of the machine and the quality of the raw material used.

### EXAMPLE 3

A hollow snack product is produced as follows. A thin sheet of farinaceous material containing potato is produced according to the method described in Example 2. The sheet is then cut into square shaped pieces and fried in cooking oil at 180°C for 2.5 minutes to give a pillow shaped product with a crisp crunchy texture and hollow centre.

### EXAMPLE 4

A potato chip like product is produced as follows:.

### INGREDIENTS

| | Grams |
|---|---|
| Pulped raw potato | 100 |
| Potato starch | 50 |
| Potato flake | 60 |
| Salt | 5 |
| Citric acid | 1 |

Fresh potato is pulped in the high speed mixer and the dry ingredients are added and an agglomerated material is prepared as in Example 2. A thin sheet of farinaceous material is produced according to Example 2. The sheet is cut and fried as in Example 3 to give a potato chip like product with a crisp and crunchy texture.

### EXAMPLE 5

A nutritious pet food is made as follows:

### INGREDIENTS

| | Grams |
|---|---|
| Sugar flour | 60 |
| Soya grits | 45 |
| Potato starch | 90 |
| Potato granules | 45 |
| Salt | 6 |
| Water | 140 |

A sheet of material of thickness 0.9 mm is produced according to the method in Example 2.

Two sheets of material are placed contiguously and then cut to form a rectangular shaped piece with the peripheral edge completely sealed all the way around. The shaped pieces are baked in an oven at 260°C for four minutes to give a hollow puffed dog food.

### EXAMPLE 6

A corn chip type product is made as follows:

### INGREDIENTS

| | Grams |
|---|---|
| Massa flour | 135 |
| Potato flake | 90 |
| Salt | 6 |
| Water | 120 |

A thin sheet of farinaceous material is produced according to the method described in Example 2.

The sheet is then fried in cooking oil at 175°C for 2.5 minutes to give a corn chip like product with a crisp crunchy texture.

### EXAMPLE 7

A breakfast food type product is made as follows:

### INGREDIENTS

| | Grams |
|---|---|
| Wheat flour (heat treated) | 35 |
| Rye meal | 40 |
| BArley flour | 15 |
| Oatmeal | 15 |
| Wheatbran | 10 |
| Potato flake | 60 |
| Water | 120 |

A thin sheet of farinaceous material is produced according to the method described in Example 2.

Two sheets of material are placed contiguously and then cut to form a rectangular shaped piece with the peripheral edge completely sealed all the way around.

The shaped pieces are microwaved at 0.75 kW for 1.5 minutes followed by a further period of baking for 2 minutes. The puffed hollow product is coated with sorbitol and sugar to produce a breakfast food suitable to be consumed with milk similar to such things as Rice Bubbles.

### EXAMPLE 8

A snack food with a nut encapsulated inside is produced. A thin sheet of farinaceous material is prepared according to the method in Example 2.

A sheet of the prepared material is placed flat and peanut pieces are placed at intervals of 30 mm along and across the sheet. A second layer of material is then placed over the first covering the nut pieces. The sheets are then cut in a rectangular shape around the nut pieces such that the peripheral edge is also completely sealed. The pieces containing the nut pieces are fried in cooking oil to form a puffed hollow snack food containing a nut piece encapsulated inside.

### EXAMPLE 9

This example produces a hollow confectionary product:

| | Grams |
|---|---|
| Wheat flour | 175 |
| Potato starch | 60 |
| Drinking chocolate | 45 |
| Wheatbran | 24 |
| Salt | 6 |
| Water | 150 |

A thin sheet of farinaceous material is produced according to the method described in Example 2.

A sheet of the prepared material is placed flat and globules of a mixture of shortening and baking powder containing sodium bicarbonate and acid pyrophosphate and water are placed at intervals of 30mm along and across the sheet. A second layer is then placed over the first covering the globules so that the sheets are contiguous except where in contact with the enclosed globules. The sheets are cut in a circular shape around the globules such that the peripheral edge is also completely sealed. The pieces are baked in an oven at 270° C for four minutes to give a hollow chocolate flavoured confectionary product.

### EXAMPLE 10

A hollow biscuit type product is manufactured.

### INGREDIENTS

| | Grams |
|---|---|
| Self raising flour | 400 |
| Butter | 50 |
| Sugar | 70 |
| Salt | 5 |
| Water | 80 |

A thin sheet of farinaceous material is prepared according to the method in Example 2 and is formed and baked according to the method in Example 5 to give a hollow biscuit or cracker type product.

### EXAMPLE 11

A four roller sheet extruder was constructed having roller diameters of 80 mm and widths of 100 mm which operates as schematically described in Fig. 3. This machine produces two continuous thin sheets of farinaceous material simultaneously with thicknesses in the range 0.1 to 3.0 mm depending on the formulation the actual gap settings and spring tensions.

### EXAMPLE 12

A partly gelatinised sheet is made as follows:

### INGREDIENTS

| | Grams |
|---|---|
| Potato starch | 170 |
| Potato granule | 125 |
| Cornflour (degerm) | 30 |
| Water | 180 |

The rollers of the three roller sheet extruder according to Fig. 1 and Example 1 are heated by an external gas flame to a surface temperature of 200°C and a thin sheet of material is produced according to Example 2. The composition of the sheet is such that it is semi-translucent and more cohesive due to partial gelatinisation of the starch.

### EXAMPLE 13

An open shaped food shell suitable for various fillings or scooping savoury dips is produced.

A thin sheet of material is produced according to the ingredients and method described in Example 2.

Two sheets of prepared material are placed contiguously and cut to form a shaped food piece in the shape of a heart with the peripheral edge completely sealed all around.

The cut and shaped pieces are fried at 175°C for 2.5 minutes to produce a hollow puffed food piece. The food piece is then separated by breaking the peripheral seal to form two half pieces which are cup or scoop like in shape and suitable for placing savoury or garnish pieces in or for scooping savoury dips or the like.

## Claims

1. Apparatus for producing a continuous thin sheet of farinaceous material of a thickness of between 0.1 and 3mm from a farinaceous dough, which comprises, closely juxtaposed, a top substantially horizontal pair of rollers (52,53;11,12;31,32) which together form an inlet opening (55;15;35) and a bottom roller (54;13;33;34) centrally located beneath said top pair of rollers (52,53;11,12;31,32), the said rollers (52,53,54;11,12,13;31,32,33,34) providing a central region (51;18;38) for receiving the dough, said rollers (52,53,54;11,12,13;31,32,33,34), in use, rotating such that dough enters through an inlet opening between the top pair of rollers (52,53;11,12;31,32) and exits through an exit opening between a roller (53;12;31,32) of the said top pair and the bottom roller (54;13;33,34), and in that gaps (59,60;15,16;35,36,37) between adjacent rollers (52,53,54;11,12,13;31,32,33,34) are selected to maintain a positive hydrostatic pressure in the central region (51;18;38) between the rollers (52,53,54;11,12,13;31, 32,33,34)
characterised in that any openings to the central region (51;18;38) formed by the arrangement of said rollers (52,53,54;11,12,13;31,32,33,34), other than the inlet and exit openings are sealed such that all of the dough is caused to pass directly through the central region (51;18;38) and exit through the exit opening thereby to avoid recycling of any of the dough between the top pair of rollers (52,53;11,12;31,32), and in that a spring, hydraulic or pneumatic means which can move said rollers (53,54;12,13;31,32,33,34) directly in response to preset central region pressure values is provided so as automatically to alter said gaps (60;16;36,37) between said rollers (53,54;12,13;31,32,33,34) through which the sheet exits whereby said pressure in the central region (51;18;38) is maintained and regulated.

2. The apparatus of claim 1 wherein the gap (56;17) between the top (52;11) and bottom (54;13) roller through which the thin sheet does not exit is sealed with a wedge, and the ends of the central region (51;18) are sealed by side plates or rotating discs.

3. The apparatus of claim 1 further including a further bottom roller (34) so as to provide a centrally located pair of bottom rollers (33,34) which are located beneath said top pair of rollers (31,32), the dough thereby exiting through two opposed exit openings (36,37) between both adjacent pairs of top (31,32) and bottom rollers (33,34).

4. The apparatus of claim 3 wherein the gap between the two bottom rollers (33,34) is sealed with a wedge, and the ends of the central region (38) are sealed by side plates or rotating discs.

5. The apparatus of claim 1 wherein the rollers (52,53,54;11,12,13;31,32,33,34) are heated or cooled.

6. The apparatus of claim 1 wherein steam is injected into the central region (51;18;38).

7. The apparatus of claim 2 wherein the hydrostatic pressure is further maintained and regulated by altering the roller speeds, such that if the pressure increases above the preset value the top roller (52;11) which is not adjacent the exit is slowed relative to the other rollers (53,54;12,13), or if the pressure decreases, said top roller (52;11) is speeded up.

8. The apparatus of claim 2 wherein the axis of the top roller (12) adjacent the exit is movably mounted on an arm (30), one end of which is connected to the axis of the bottom roller (13), allowing the gap (16) between the rollers (12,13) to be adjusted, said arm (30) also being pivotable around the lower roller axis, thereby allowing the gap (15) between the two top rollers (11,12) to be adjusted.

9. A method of producing a continuous thin sheet of farinaceous material of a thickness of between 0.1 and 3mm from a farinaceous dough, using an apparatus comprising, closely juxtaposed, a top substantially horizontal pair of rollers (52,53;11,12;31,32), and centrally located beneath said top rollers (52,53;11,12;31,32) either an additional roller (54;13), or an additional pair of rollers (33,34), the three (52,53,54;11,12,13) or four (31,32,33,34) rollers providing a central region (51;18;38) for receiving the dough, said rollers (52,53,54;11,12,13;31,32,33,34) rotating such that dough enters between the two top (52,53;11,12;31, 32) rollers and exits between a top roller (53;12) and the bottom roller (54;13) in the case of one bottom roller, or between both adjacent top (31,32) and bottom (33,34) rollers in the case of two bottom rollers, the other openings to the central region (51;18;38) being sealed, wherein gaps (59,60;15,16;35,36,37) between adjacent rollers (52,53,54;11,12,13;31,32,33,34) are selected to maintain a positive hydrostatic pressure in the central region (51;18;38) between the rollers (52,53,54;11,12,13;31, 32,33,34), and wherein said pressure is maintained and regulated by altering said gap (60;16;36,37) between two rollers (53,54;12,13;31,32,33,34) through which a sheet exits, by means of a spring, or hydraulic or pneumatic device, such that if said pressure increases above a preset value the rollers (53,54;12,13;31,32,33,34) move apart, or if said pressure falls below another preset value the rollers (53,54;12,13;31,32,33,34) move closer together; the method comprising the steps of feeding the dough into the central region (51;18;38) via the gap (59;15;35) between the top rotating rollers (52,53;11,12;31,32), and producing a thin sheet of farinaceous material through the gap (60;16;36,37) between the one (54;13) or two (33,34) bottom rollers and the adjacent top (53;12;31,32) rollers, while maintaining the positive hydrostatic pressure within said central region (51;18;38).

10. The method of claim 9 wherein the farinaceous dough is a free flowing moist agglomerate having a total moisture content below the level where the material forms a cohesive dough mass before entering the rollers (52,53,54;11,12,13;31, 32,33,34), wherein said agglomerate is produced by means of high speed chopping blades during the mixing and hydrating process.

11. The method of claim 9 wherein the dough contains substantially no gluten, gums, modified starches, or other binders.

12. The method of claim 11 wherein the dough consists of potato starch, flakes or granules.

13. A method of claim 11 wherein the dough consists of corn starch or massa, rice flour or wheat starch.

14. The method of claim 9 wherein the rollers (52,53,54;11, 12,13;31,32,33,34) are heated, thereby heating the dough as it is processed through the rollers (52,53,54;11,12,13;31,32,33,34).

15. The method of claim 9 wherein the rollers (52,53,54;11, 12,13;31,32,33,34) are cooled, thereby cooling the dough as it is processed through the rollers (52,53,54;11,12,13;31,32, 33,34).

16. The method of claim 9 wherein steam is injected into the central region (51;18;38).

17. The method of claim 9 wherein the material is super heated under pressure within the central region (51;18;38) to a temperature above the temperature to which it is able to be heated at atmospheric pressure.

18. The method of claim 9 wherein the farinaceous material is heated so as to at least partly gelatinise the farinaceous material.

19. A method of making a baked or fried product which comprises producing a thin sheet of farinaceous material by the method of claim 9 or 18, cutting said sheet to obtain individual shaped pieces, and baking or frying said pieces to obtain a cooked food product.

20. The method according to claim 19 wherein the cut and shaped pieces are dried, and optionally stored, before being baked or fried.

21. A method for making a hollow three dimensional food product which comprises making a thin sheet of farinaceous material by the method of claim 9, positioning two sheets of said material contiguously and cutting and sealing the peripheral edges of the cut and shaped pieces, baking or frying said pieces such that steam generated between the layers causes the pieces to expand and form a hollow three dimensional food product.

22. The method of claim 21 wherein two thin sheets are produced simultaneously by a four roller apparatus.

23. The method of claim 21 wherein a second, discreet food article is positioned between the two contiguous sheets, such that the sheets are cut around the introduced article and completely sealed around the peripheral edges thereof; and said baking or frying causes the layers to form a hollow completely enclosed food article, with a discreet second food article encapsulated within.

## Patentansprüche

1. Vorrichtung zur Herstellung einer kontinuierlichen dünnen Platte mehlhaltigen Materials einer Dicke zwischen 0,1 und 3 mm aus mehlhaltigem Teig, die nahe beinanderliegend ein oberes Paar von im wesentlichen horizontal angeordneten Walzen (52,53; 11,12; 31,32) umfaßt, die zusammen eine Einlaßöffnung (55; 15; 35) sowie eine untere Walze (54; 13; 33; 34), die mittig unterhalb des oberen Walzenpaares (52, 53; 11, 12; 31, 32) einen Mittelbereich (51; 18; 38) bilden, der den Teig aufnimmt, wobei während des Betriebes die Walzen (52,53,54; 11,12,13; 31,32,33,34) derart rotieren, daß der Teig durch eine Einlaßöffnung zwischen dem oberen Walzenpaar (52,53; 11,12; 31,32) eintritt und durch eine Austrittsöffnung zwischen einer Walze (53; 12; 31,32) des oberen Paares und der unteren Walze (54; 13; 33,34) austritt und wobei die Spalte (59,60; 15,16; 35,36,37) zwischen angrenzenden Walzen (52,53,54; 11,12, 13; 31,33,34) so gewählt sind, daß im Mittelbereich (51; 18; 38) zwischen den Walzen (52,53,54; 11,12,13; 31,32,33,34) ein positiver hydrostatischer Druck aufrechterhalten wird, dadurch gekennzeichnet, daß alle Öffnungen zum Mittelbereich (51; 18; 38), die sich durch die Anordnung der Walzen (52,53,54; 11,12,13; 31,32,33, 34) bilden, mit Ausnahme der Einlaß- und Auslaßöffnung, so abgedichtet sind, daß der ganze Teig direkt durch den Mittelbereich (51; 18; 38) eingeführt und durch die Auslaßöffnung ausgetragen wird, wodurch ein Umlaufen von Teig zwischen dem oberen Walzenpaar (52,53; 11,12; 31,32) verhindert wird und daß eine Feder oder eine pneumatische oder hydraulische Einrichtung, die die Walzen (53,54; 12,13; 31,32,33,34) in Abhängigkeit von vorgegebenen Druckwerten in dem Mittelbereich bewegen kann, vorgesehen ist, so daß sich die Spalte (60; 16; 36,37) zwischen den Walzen (53,54; 12,13; 31,32,33,34), durch die die Platte austritt, automatisch verändern, wodurch der Druck im Mittelbereich (51; 18;38) aufrechterhalten und reguliert wird.

2. Vorrichtung nach Anspruch 1, bei der der Spalt (56; 17) zwischen der oberen (52; 11) und der unteren Walze (54; 13), durch den die dünne Platte nicht austritt, mit einem Keil abgedichtet ist und die Enden des Mittelbereiches (51; 18) durch Seitenplatten oder rotierende Scheiben abgedichtet sind.

3. Vorrichtung nach Anspruch 1, mit einer weiteren unteren Walze (34), so daß ein zentral angeordnetes unteres Walzenpaar (33,34) entsteht, das unterhalb des oberen Walzenpaares (31,32) angeordnet ist, wobei der Teig durch zwei einander gegenüberliegende Auslaßöffnungen (36,37) austritt, die zwischen den beiden angrenzenden Paaren von oberen (31,32) und unteren Walzen (33,34) liegen.

4. Vorrichtung nach Anspruch 3, bei der der Spalt zwischen den beiden unteren Walzen (33,34) mit einem Keil abgedichtet ist und die Enden des Mittelbereiches (38) durch Seitenplatten oder rotierende Scheiben abgedichtet sind.

5. Vorrichtung nach Anspruch 1, bei der die Walzen (52,53, 54; 11,12,13; 31,32,33,34) erwärmt oder gekühlt werden.

6. Vorrichtung nach Anspruch 1, bei der Dampf in den Mittelbereich (51; 18; 38) injiziert wird.

7. Vorrichtung nach Anspruch 2, bei der der hydrostatische Druck durch Veränderung der Walzendrehzahlen derart aufrechterhalten und reguliert wird, daß wenn der Druck über den vorgegebenen Wert ansteigt, sich die Drehzahl der oberen Walze (52; 11), die nicht an den Auslaß angrenzt, gegenüber den anderen Walzen (53,54; 12,13) erniedrigt oder, wenn der Druck absinkt, sich die Drehzahl der oberen Walze (52; 11) erhöht.

8. Vorrichtung nach Anspruch 2, bei der die an den Auslaß angrenzende Achse der oberen Walze (12) beweglich auf einem Arm (30) montiert ist, dessen eines Ende mit der Achse der unteren Walze (13) verbunden ist, wodurch der Spalt (16) zwischen den Walzen (12,13) verstellt werden kann, wobei dieser Arm (30) auch schwenkbar um die Achse der unteren Walze gelagert ist, wodurch der Spalt (15) zwischen den beiden oberen Walzen (11,12) verstellt werden kann.

9. Verfahren zur Herstellung einer kontinuierlichen dünnen Platte mehlhaltigen Materials einer Dicke zwischen 0,1 und 3 mm aus mehlhaltigem Teig unter Verwendung einer Vorrichtung, die, nahe beieinanderliegend, ein oberes, im wesentlichen horizontal angeordnetes Paar von Walzen (52,53; 11,12; 31,32) umfaßt sowie mittig unterhalb der oberen Walzen (52,53; 11,12; 31,32) entweder eine zusätzliche Walze (54; 13) oder ein zusätzliches Walzenpaar (33,34), wobei die drei (52,53,54; 11,12,13) oder vier (31,32,33,34) Walzen einen Mittelbereich (51; 18; 38) zur Aufnahme des Teiges bilden, die Walzen (52,53, 54; 11,12,13; 31,32,33,34) derart rotieren, daß der Teig zwischen den beiden oberen Walzen (52,53; 11,12; 31,32) eintritt und im Falle einer unteren Walze zwischen einer oberen Walze (53; 12) und der unteren Walze (54; 13) oder im Falle zweier unterer Walzen zwischen den angrenzenden oberen (31,32) und unteren (33,34) Walzen austritt, die anderen Öffnungen zum Mittelbereich (51; 18; 38) abgedichtet sind, die Spalte (59,60; 15,16; 35,36, 37) zwischen den angrenzenden Walzen (52,53,54; 11,12, 13; 31,32,33,34) so gewählt sind, daß ein positiver hydrostatischer Druck im Mittelbereich (51; 18; 38) zwischen den Walzen (52,53,54; 11,12,13; 31,32,33,34) aufrechterhalten wird und wobei der Druck durch Veränderung des Spaltes (60; 16; 36,37) zwischen zwei Walzen (53,54; 12,13; 31,32,33,34), durch den eine Platte austritt, aufrechterhalten und reguliert wird, und zwar mittels einer Feder oder einer hydraulischen oder pneumatischen Einrichtung derart, daß, wenn der Druck über einen vorgegebenen Wert ansteigt, sich die Walzen (53, 54; 12,13; 31,32,33,34) auseinander bewegen, oder, wenn der Druck unter einen anderen vorgegebenen Wert absinkt, sich die Walzen (53,54; 12,13; 31,32,33,34) aufeinander zu bewegen und wobei das Verfahren den Schritt umfaßt: Zuführen des Teiges in den Mittelbereich (51; 18; 38) durch den Spalt (59; 15; 35) zwischen den oberen rotierenden Walzen (52, 53; 11,12; 31,32) sowie Herstellen einer dünnen Platte mehlhaltigen Materials durch den Spalt (60; 16; 36,37) zwischen der einen unteren Walze (54; 13) oder den beiden unteren Walzen (33,34) und den angrenzenden oberen Walzen (53; 12; 31,32), während der positive hydrostatische Druck innerhalb des Mittelbereiches (51; 18; 38) aufrechterhalten wird.

10. Verfahren nach Anspruch 9, bei dem der mehlhaltige Teig ein freifließendes, feuchtes Agglomerat ist, dessen Gesamtfeuchtegehalt unterhalb des Wertes liegt, bei dem das Material vor dem Eintritt in die Walzen (52,53,54; 11,12,13; 31,32,33,34) eine kohäsive Teigmasse bildet, wobei das Agglomerat während des Misch- und Hydratationsvorganges mit Hilfe von Hochgeschwindigkeits-Schneidmessern hergestellt wird.

11. Verfahren nach Anspruch 9, bei dem der Teig im wesentlichen kein Gluten, kein Gummi, keine modifizierte Stärke oder andere Bindemittel enthält.

12. Verfahren nach Anspruch 11, bei dem der Teig aus Kartoffelstärke, -flocken oder -granulat besteht.

13. Verfahren nach Anspruch 11, wobei der Teig aus Maisstärke oder Massa, Reismehl oder Weizenstärke besteht.

14. Verfahren nach Anspruch 9, bei dem die Walzen (52,53,54; 11,12,13; 31,32,33,34) erwärmt werden, wodurch auch der Teig bei seiner Verarbeitung durch die Walzen (52,53,54; 11,12,13; 31,32,33,34) erwärmt wird.

15. Verfahren nach Anspruch 9, bei dem die Walzen (52,53, 54; 11,12,13; 31,32,33,34) gekühlt werden, wodurch der Teig bei seiner Verarbeitung durch die Walzen (52,53,54; 11,12,13; 31,32,33,34) gekühlt wird.

16. Verfahren nach Anspruch 9, bei dem Dampf in den Mittelbereich (51; 18; 38) injiziert wird.

17. Verfahren nach Anspruch 9, bei dem das Material im Mittelbereich (51; 18; 38) unter Druck auf einen Temperaturwert überhitzt wird, der über derjenigen Temperatur liegt, auf die es bei atmosphärischem Druck erhitzt werden kann.

18. Verfahren nach Anspruch 9, bei dem das mehlhaltige Material so erwärmt wird, daß es zumindest teilweise gelatiniert wird.

19. Verfahren zur Herstellung eines gebackenen oder gebratenen Produktes, das die Herstellung einer dünnen Platte mehlhaltigen Materials nach dem Verfahren gemäß Anspruch 9 oder 18, das Schneiden der Platte, wodurch sich individuell geformte Stücke ergeben, und das Backen oder Braten dieser Stücke, so daß ein gegartes Lebensmittelprodukt entsteht, umfaßt.

20. Verfahren nach Anspruch 19, bei dem die geschnittenen und geformten Stücke getrocknet und bei Bedarf gelagert werden, bevor sie gebacken oder gebraten werden.

21. Verfahren zur Herstellung eines hohlen, dreidimensionalen Lebensmittelproduktes, das die Herstellung einer dünnen Platte mehlhaltigen Materials nach dem Verfahren gemäß Anspruch 9, das Aufeinanderlegen zweier Platten dieses Materials und das Schneiden und Abdichten der Außenkanten der gechnittenen und geformten Stücke, das Backen oder Braten dieser Stücke, so daß der sich zwischen den Schichten bildende Dampf die Stücke auseinander treibt und sich ein hohles dreidimensionales Lebensmittelprodukt bildet, umfaßt.

22. Verfahren nach Anspruch 21, bei dem in einer Vierwalzenvorrichtung zwei dünne Platten gleichzeitig hergestellt werden.

23. Verfahren nach Anspruch 21, bei dem ein zweiter separater Lebensmittelartikel zwischen die beiden aufeinander liegenden Platten gebracht wird, so daß die Platten um den eingebrachten Artikel herum geschnitten und die Außenkanten entlang der gesamten Peripherie abgedichtet werden und durch Backen oder Braten die Schichten einen hohlen, vollständig geschlossenen Lebensmittelartikel bilden, in den ein separater zweiter Lebensmittelartikel eingeschlossen ist.

## Revendications

1. Appareil servant à produire une mince feuille continue de produit farineux d'une épaisseur comprise entre 0,1 et 3 mm à partir d'une pâte farineuse, lequel comprend, côte à côte une paire de rouleaux supérieurs sensiblement horizontaux (52, 53 ; 11, 12 ; 31, 32) formant ensemble une ouverture d'entrée (55 ; 15 ; 35) et un rouleau inférieur (54 ; 13 ; 33, 34) situé en position centrale sous la paire de rouleaux supérieurs (52, 53 ; 11, 12 ; 31, 32) lesdits rouleaux (52, 53, 54 ; 11, 12, 13 ; 31, 32, 33, 34) alimentant une partie centrale en pâte (51 ; 18 ; 38), et lesdits rouleaux (52, 53, 54 ; 11, 12, 13 ; 31, 32, 33, 34), en marche, tournant de manière que la pâte entre en passant par une ouverture d'entrée ménagée entre la paire de rouleaux supérieurs (52, 53 ; 11, 12 ; 31, 32) et sorte par une ouverture de sortie ménagée entre un rouleau (53 ; 12 ; 31, 32) de ladite paire supérieure et le rouleau inférieur (54 ; 13 ; 33, 34), des interstices (59, 60 ; 15, 16 ; 35, 36, 37) entre les rouleaux adjacents (52, 53, 54 ; 11, 12, 13 ; 31, 32, 33, 34) étant sélectionnés pour maintenir une pression hydrostatique positive dans la partie centrale (51 ; 18 ; 38) entre les rouleaux (52, 53, 54 ; 11, 12, 13 ; 31, 32, 33, 34),
caractérisé en ce que toutes les ouvertures vers la partie centrale (51 ; 18 ; 38) formées par la disposition des rouleaux (52, 53, 54; 11, 12, 13 ; 31, 32, 33, 34), autres que les ouvertures d'entrée et de sortie sont fermées hermétiquement de manière que la pâte est obligée de passer directement à travers la partie centrale (51 ; 18 ; 38) et de sortir par l'ouverture de sortie, afin d'éviter un recyclage de toute quantité de pâte entre la paire supérieure des rouleaux (52, 53 ; 11, 12 ; 31, 32), et en ce qu'un moyen à ressort, hydraulique ou pneumatique, capable de déplacer lesdits rouleaux (53, 54 ; 12, 13 ; 31, 32, 33, 34) directement en réponse à des valeurs de pression préétablies dans la partie centrale est prévu pour modifier automatiquement lesdits interstices (60 ; 16 ; 36, 37) entre lesdits rouleaux (53, 54 ; 12, 13 ; 31, 32, 33, 34) à travers lesquels sort la feuille, d'où il résulte que ladite pression est maintenue et régulée dans la partie centrale (51 ; 18 ; 38).

2. Appareil selon la revendication 1, dans lequel l'interstice (56 ; 17) entre le rouleau supérieur (52 ; 11) et le rouleau inférieur (54 ; 13) à travers lequel la feuille mince ne sort pas, est fermé hermétiquement par un coin, et les extrémités de la partie centrale (51 ; 18) sont fermées par des plaques latérales ou des disques rotatifs.

3. Appareil selon la revendication 1, comportant en outre un autre rouleau inférieur (34) de manière à disposer d'une paire de rouleaux inférieurs (33, 34) en position centrale situés sous la paire de rouleaux supérieurs (31, 32), la pâte sortant alors par deux ouvertures de sortie opposées (36, 37) entre deux paires adjacentes de rouleaux supérieurs (31, 32) et inférieurs (33, 34).

4. Appareil selon la revendication 3, dans lequel l'interstice entre les deux rouleaux inférieurs (33, 34) est fermé hermétiquement par un coin, et les extrémités de la partie centrale (38) par des plaques latérales ou des disques rotatifs.

5. Appareil selon la revendication 1, dans lequel les rouleaux (52, 53, 54 ; 11, 12, 13 ; 31, 32, 33, 34) sont chauffés ou refroidis.

6. Appareil selon la revendication 1, dans lequel de la vapeur est injectée dans la région centrale (51 ; 18 ; 38).

7. Appareil selon la revendication 2, dans lequel la pression hydrostatique est en outre maintenue et régulée par modification des vitesses des rouleaux, de manière que, si la pression dépasse la valeur préétablie, le rouleau supérieur (52, 11) qui n'est pas adjacent à la sortie, est ralenti par rapport aux autres rouleaux (53, 54, 12, 13) ou, si la pression décroît, le rouleau supérieur (52, 11) est accéléré.

8. Appareil selon la revendication 2, dans lequel l'axe du rouleau supérieur (12) adjacent à la sortie est monté mobile sur un bras (30), dont une extrémité est reliée à l'axe du rouleau inférieur (13), ceci permettant un ajustement de l'interstice (16) entre les rouleaux (12, 13), ledit bras (30) pouvant également pivoter autour de l'axe du rouleau inférieur, ce qui autorise l'ajustement de l'interstice (15) entre les deux rouleaux supérieurs (11, 12).

9. Procédé de production d'une mince feuille continue de produit farineux d'une épaisseur comprise entre 0,1 et 3 mm à partir d'une pâte farineuse, en utilisant un appareil comprenant, côte à côte, une paire de rouleaux supérieurs sensiblement horizontaux (52, 53 ; 11, 12 ; 31, 32) et, de façon centrale, sous lesdits rouleaux supérieurs (52, 53 ; 11, 12 ; 31, 32) soit un rouleau additionnel (54 ; 13) soit une paire de rouleaux additionnels (33, 34), ces trois (52, 53, 54 ; 11, 12, 13) ou quatre (31, 32, 33, 34) rouleaux définissant une partie centrale (51 ; 18 ; 38) pour recevoir la pâte, lesdits rouleaux (52, 53, 54 ; 11, 12, 13 ; 31, 32, 33, 34) tournant de manière que la pâte pénètre entre les deux rouleaux supérieurs (52, 53 ; 11, 12 ; 31, 32) et sort entre un rouleau supérieur (53 ; 12) et le rouleau inférieur (54 ; 13) dans le cas où il n'y a qu'un rouleau inférieur, ou entre les deux rouleaux adjacents supérieurs (31, 32) et inférieurs (33, 34) dans le cas de deux rouleaux inférieurs, les autres ouvertures vers la partie centrale (51 ; 18 ; 38) étant fermées hermétiquement ; dans lequel des interstices (59, 60 ; 15, 16 ; 35, 36, 37) entre des rouleaux adjacents (52, 53, 54 ; 11, 12, 13 ; 31, 32, 33, 34) sont choisis de manière à maintenir dans la partie centrale (51 ; 18 ; 38) entre les rouleaux (52, 53, 54 ; 11, 12, 13 ; 31, 32, 33, 34) une pression hydrostatique positive, et dans lequel ladite pression est maintenue et régulée par modification dudit interstice (60 ; 16 ; 36, 37) entre deux rouleaux (53, 54 ; 12, 13 ; 31, 32, 33, 34) à travers lesquels sort, au moyen d'un dispositif à ressort, hydraulique ou pneumatique, une feuille de manière que si ladite pression augmente au-delà d'une valeur préétablie, les rouleaux (53, 54 ; 12, 13 ; 31, 32, 33, 34) s'écartent l'un de l'autre, ou si ladite pression tombe au-dessous d'une autre valeur préétablie, les rouleaux (53, 54 ; 12, 13 ; 31, 32, 33, 34) se rapprochent l'un de l'autre ; ce procédé comprenant les étapes d'alimentation de la pâte dans la partie centrale (51 ; 18 ; 38) à travers l'interstice (59 ; 15 ; 35) entre les rouleaux rotatifs supérieurs (52, 53 ; 11, 12 ; 31, 32) et de production d'une mince feuille de matière farineuse à travers l'interstice (60 ; 16 ; 36, 37) entre un (54 ; 13) ou deux (33, 34) rouleaux inférieurs et les rouleaux supérieurs adjacents (53 ; 12 ; 31, 32), tout en maintenant la pression hydrostatique positive dans ladite partie centrale (51 ; 18 ; 38).

10. Procédé selon la revendication 9, dans lequel la pâte farineuse est un produit aggloméré humide coulant librement dont le taux d'humidité global est inférieur au niveau où la matière forme un masse pâteuse consistante avant de passer par les rouleaux (52, 53, 54 ; 11, 12, 13 ; 31, 32, 33, 34), dans lequel cedit produit aggloméré est fabriqué à l'aide de pales coupeuses à vitesse élevée durant l'opération de mélange et d'hydratation.

11. Procédé selon la revendication 9, dans lequel la pâte ne contient sensiblement ni gluten, ni matière collante, ni amidon modifié, ni autres liants.

12. Procédé selon la revendication 11, dans lequel la pâte comprend de l'amidon, des flocons ou des granulés de pomme de terre.

13. Procédé selon la revendication 11, dans lequel la pâte est composée d'amidon de céréales ou massa, de farine de riz ou d'amidon de blé.

14. Procédé selon la revendication 9, dans lequel les rouleaux (52, 53, 54 ; 11, 12, 13 ; 31, 32, 33, 34) sont chauffés, chauffant ainsi la pâte tandis qu'elle passe à travers les rouleaux (52, 53, 54 ; 11, 12, 13 ; 31, 32, 33, 34).

15. Procédé selon la revendication 9, dans lequel les rouleaux (52, 53, 54 ; 11, 12, 13 ; 31, 32, 33, 34) sont refroidis, refroidissant ainsi la pâte tandis qu'elle passe à travers les rouleaux (52, 53, 54 ; 11, 12, 13 ; 31, 32, 33, 34).

16. Procédé selon la revendication 9, dans lequel de la vapeur est injectée dans la partie centrale (51 ; 18 ; 38).

17. Procédé selon la revendication 9, dans lequel la matière est surchauffée sous pression dans la partie centrale (51 ; 18 ; 38) jusqu'à une température supérieure à celle à laquelle elle peut être chauffée à pression atmosphérique.

18. Procédé selon la revendication 9, dans lequel la matière farineuse est chauffée de manière à gélatiniser au moins en partie la matière farineuse.

19. Procédé de fabrication d'un produit cuit ou frit comprenant la confection d'une mince feuille de produit farineux par le procédé selon la revendication 9 ou 18, la découpe de ladite feuille pour obtenir des parts individuelles formées, et la cuisson au four ou la friture desdites parts pour obtenir un produit alimentaire cuit.

20. Procédé selon la revendication 19, dans lequel les parts découpées et mises en forme sont séchées, et optionnellement stockées, avant d'être cuites au four ou frites.

21. Procédé de fabrication d'un produit alimentaire creux tridimensionnel comprenant les étapes consistant à confectionner une fine feuille de matière farineuse par le procédé selon la revendication 9, à positionner deux feuilles de ladite matière côte à côte et à découper et à assurer une liaison hermétique des bords périphériques des parts coupées et mises en forme, à faire cuire au four ou frire lesdites parts de manière que la vapeur produite entre les feuilles entraîne une dilatation des parts et la formation d'un produit culinaire creux à trois dimensions.

22. Procédé selon la revendication 21, dans lequel deux fines feuilles sont produites simultanément par une machine à quatre rouleaux.

23. Procédé selon la revendication 21, dans lequel un second produit alimentaire, discret est positionné entre deux feuilles contiguës de manière que les parts sont découpées autour du produit introduit et qu'elles sont fermées autour des bords périphériques, et dans lequel, suite à la cuisson au four ou à la friture, les feuilles forment un produit alimentaire creux entièrement fermé, avec un second produit discret encapsulé à l'intérieur.
